Europäisches Patentamt

European Patent Office

Office européen des brevets

(11) Veröffentlichungsnummer: **0 279 342 B1**

## EUROPÄISCHE PATENTSCHRIFT

(45) Veröffentlichungstag der Patentschrift: **08.01.92**

(51) Int. Cl.⁵: **C08L 77/00**

(21) Anmeldenummer: **88101930.1**

(22) Anmeldetag: **10.02.88**

Die Akte enthält technische Angaben, die nach dem Eingang der Anmeldung eingereicht wurden und die nicht in dieser Patentschrift enthalten sind.

(54) **Polyamidmischungen und Formkörper daraus.**

(30) Priorität: **19.02.87 DE 3705228**

(43) Veröffentlichungstag der Anmeldung:
**24.08.88 Patentblatt 88/34**

(45) Bekanntmachung des Hinweises auf die
Patenterteilung:
**08.01.92 Patentblatt 92/02**

(84) Benannte Vertragsstaaten:
**CH DE ES FR GB IT LI**

(56) Entgegenhaltungen:
**EP-A- 0 070 001**
**EP-A- 0 073 036**

(73) Patentinhaber: **BAYER AG**

**W-5090 Leverkusen 1 Bayerwerk(DE)**

(72) Erfinder: **Bonten, Heinz**
**An der Heimstätte 23**
**W-4150 Krefeld(DE)**
Erfinder: **Nielinger, Werner, Dr.**
**Bärenstrasse 21**
**W-4150 Krefeld(DE)**
Erfinder: **Michael, Dietrich, Dr.**
**Deswatinesstrasse 57**
**W-4150 Krefeld(DE)**
Erfinder: **Wandel, Martin, Dr.**
**Donatusstrasse 17**
**W-4047 Dormagen 11(DE)**

**Beschreibung**

Die Erfindung betrifft Mischungen aus 30 bis 95 Gew.-% Poly(hexamethylenisophthalamid) und 5 bis 70 Gew.-% Poly(hexamethylenadipamid) sowie Formkörper aus diesen Mischungen. Derartige Mischungen zeigen bessere Verarbeitungseigenschaften wie gute Fließeigenschaften als Schmelze, sowie gute Reißdehnung in den Formkörpern.

Es ist seit langem bekannt, daß Mischungen aus teilkristallinen und amorphen Polyamiden in mancher Hinsicht verbesserte Eigenschaften gegenüber den Ausgangspolyamiden haben. So kann man nach der europäischen Patentschrift 70 001 die Chemikalienbeständigkeit, insbesondere die Stabilität von teilkristallinen Polyamiden gegen Zinkchloridlösungen, verbessern, indem man ein spezielles Copolyamid aus Isophthalsäure, Terephthalsäure, Hexamethylendiamin und 4,4'-Diaminodicyclohexylmethan zumischt. Eine nennenswerte Verbesserung der mechanischen Eigenschaften wird durch diese Maßnahme aber nicht erreicht.

Mischungen aus teilkristallinen Polyamiden und dem amorphen Polyamid aus Terephthalsäure und dem Isomerengemisch des 2,2,4- und 2,4,4-Trimethylhexamethylendiamins ergeben nach der DE-A 17 69 040 schwindungsarme Formkörper mit hoher Kerbschlagzähigkeit. Die Zähigkeitswerte der Mischungen liegen aber zwischen denen der Ausgangsprodukte, eine deutlich verbesserte Zähigkeit wird nicht beobachtet.

Wie aus der DE-A 32 00 428 bekannt ist, kann man Oberflächenstörungen, die bei glasfaserverstärkten oder füllstoffhaltigen, teilkristallinen Polyamiden vor allem in Angußnähe auftreten, durch Zusatz von 3 - 20 Gew.-% eines amorphen Polyamids beseitigen. Die mechanischen Eigenschaften der auf diese Weise modifizierten Polyamide bleiben im großen und ganzen unverändert.

In der EP-A 73036 werden schlagzähmodifizierte Mischungen aus thermoplastischen amorphen und thermoplastischen semikristallinen Polyamiden mit 1-40 % Zusatz an Schlagzähmodifikatoren beschrieben. Die Mischungen, welche laut Beispielen immer 4,4'-Diaminodicyclohexylmethan enthalten, zeigen trotz der Gegenwart von Schlagzähmodifikatoren nur relativ niedrige Dehnungen.

Es wurde nun überraschend gefunden, daß Mischungen aus Polyamid-66 und Poly-(hexamethylenisophthalamid) eine gegenüber den beiden Polyamiden wesentlich verbesserte Reißdehnung haben, wenn die Mischungen aus 50 bis 90 Teilen Poly(hexamethylenisophthalamid) und 10 bis 50 Teilen Poly(hexamethylenadipamid) bestehen. Mischungen mit Polyamid-6 anstelle von Polyamid-66 oder solche mit anderen amorphen Polyamiden, wie dem Polyamid aus Isophthalsäure, 4,4'-Diamino-3,3'-dimethyldicyclohexylmethan und Laurinlactam, zeigen dieses Verhalten nicht.

Mischungen aus Polyamid-66 und dem Polyamid aus Terephthalsäure und dem Isomerengemisch aus 2,2,4- und 2,4,4-Trimethylhexamethylendiamin bzw. einem Copolyamid aus $\epsilon$-Caprolactam, Isophthalsäure und Isophorondiamin haben zwar eine den Mischungen aus Polyamid-66 und Poly-(hexamethylenisophthalamid) vergleichbare Reißdehnung, die Fließlänge der Mischungen ist aber vergleichsweise gering, so daß diese Produkte insbesondere zu komplizierten Formteilen nur schwierig verarbeitbar sind.

Gegenstand der Erfindung sind daher Mischungen aus 30 bis 95, vorzugsweise 50 bis 90 Gew.-% Poly-(hexamethylenisophthalamid) und 5 bis 70, vorzugsweise 10 bis 50 Gew.-% Polyamid-66. Die relativen Viskositäten der eingesetzten Polyamide, gemessen an einer einprozentigen Lösung in m-Kresol in einem Ubbelohde-Viskosimeter bei 25 °C betragen 2,3 bis 4,0, vorzugsweise 2,8 bis 3,5 für das Polyamid-66 und 1,8 bis 3,5 vorzugsweise 2,2 bis 2,9 für das Poly(hexamethylenisophthalamid). Erfindungsgegenstand ist auch die Verwendung der erfindungsgemäßen Mischung zur Herstellung von Formkörpern über Schmelzverarbeitung.

Gegenüber den bekannten Polyamidmischungen zeichnen sich die erfindungsgemäßen Produkte durch eine Kombination von Eigenschaften aus, die Mischungen aus anderen Polyamiden nicht besitzen. Insbesondere sind die verbesserte Reißdehnung bei Erhalt der Steifigkeit und bei gutem Verarbeitungsverhalten zu nennen. Die Mischungen sind bleibend transparent, wenn der Anteil an Polyamid-66 35 Gew.-% nicht überschreitet. Die erfindungsgemäßen Mischungen zeigen dabei eine vorteilhafte Fließcharakteristik in der Schmelze ("Fließlänge") und lassen sich sehr gut aus der Schmelze zu Formkörpern mit erhöhter Reißdehnung verarbeiten.

Die Herstellung der erfindungsgemäßen Produkte erfolgt durch Mischen der Komponenten im geschmolzenen Zustand, indem man beispielsweise eine Mischung der Polyamidgranulate in eine Spritzgießmaschine gibt und die gegebenenfalls einer mechanischen Scherung unterworfene Schmelze direkt zu Formteilen verarbeitet. Man kann jedoch auch die einzelnen Polyamide gemeinsam oder getrennt aufschmelzen und die Schmelzen in geeigneten handelsüblichen Apparaten, beispielsweise in einem Doppelwellenextruder, vorzugsweise solchem mit Misch- und Knetzonen, miteinander mischen und aus dieser Mischung hergestelltes Granulat in bekannter Weise zu Formteilen verarbeiten.

Bei der Compoundierung können die üblichen Zuschlagstoffe und Hilfsmittel zugesetzt werden, beispielsweise Gleit-und Entformungsmittel, Nukleiermittel und Stabilisatoren, ferner Flammschutzmittel und Füllstoffe. Als Füllstoffe kommen Mikroglaskugeln, Kreide, Quarze wie Novaculit, ferner Silikate wie Asbest, Feldspat, Glimmer, Talkum, Wollastonit sowie Kaolin in calcinierter und nicht calcinierter Form in Betracht. Glasfasern können gegebenenfalls nur in begrenzter Menge, unter 10 Gew.-%, vorzugsweise unter 5 Gew.-% mitverwendet werden. Bevorzugt sind glasfaserfreie Mischungen. Außerdem sind Farbstoffe und Pigmente zu nennen, ferner Schlagzähmodifikatoren, beispielsweise auf der Basis von Copolymerisaten des Ethylens, oder gepfropften Kautschuklatices auf beispielsweise Polybutadien- oder Poly(meth)acrylat-Basis. Derartige Schlagzähmodifikatoren werden beispielsweise in DE-OS 26 22 973, EP 12 45, EP 83 446 beschrieben.

Die Polyamidmischungen lassen sich ohne Probleme auf handelsübliche Spritzgießmaschinen und Extrudern verarbeiten. Man kann daraus Formkörper wie Spritzgießteile, Platten, Profile für den Maschinenbau, für technische Geräte, den Automobilbau und den Elektrosektor sowie Gebrauchsgegenstände wie Einfassungen von Brillengläsern herstellen.

Beispiele

Man stellt aus Mischungen von Polyamidgranulaten auf einer Spritzgießmaschine vom Typ Arburg-E bei 280°C Massetemperatur und einer Werkzeugtemperatur von 50°C, Prüfkörper zur Bestimmung der Eigenschaftswerte her (Schulterstab Nr. 3; Stärke 3,2 mm).

Es wurden folgende Polyamide eingesetzt:

A Poly(hexamethylenisophthalamid) $\eta_{rel}^* = 2,4$

B Polyamid-66 $\eta_{rel} = 3,0$

C Polyamid-6 (für Vergleichsversuch) $\eta_{rel} = 2,9$

D Copolyamid aus $\epsilon$-Caprolactam, Isophthalsäure und Isophorondiamin (für Vergleichsversuche)- $\eta_{rel} = 3,8$

E Polyamid aus Terephthalsäure und dem Isomerengemisch aus 2,2,4- und 2,4,4-Trimethylhexamethylendiamin (für Vergleichsversuche) $\eta_{rel} = 2,7$

F Copolyamid aus Laurinlactam; Isophthalsäure und 3,3'-Dimethyl-4,4'-diaminodicyclohexylmethan (für Vergleichsversuche) $\eta_{rel} = 2,5$

In den folgenden Tabellen 1 und 2 sind die Zusammensetzungen der Mischungen beziehungsweise ihre Eigenschaftswerte angegeben.

## Tabelle 1

### Zusammensetzung der Mischungen (Gew.-%)

| Beispiel | 1 (erfindungsgemäß) | 2 | 3 | 4 | 5 |
| --- | --- | --- | --- | --- | --- |
| | | (Vergleichsversuche) | | | |
| Polyamid | | | | | |
| A | 50 | 50 | 50 | | |
| B | 50 | | | 50 | 50 |
| C | | 50 | | | |
| D | | | 50 | | |
| E | | | | 50 | |
| F | | | | | 50 |

* $\eta_{rel}$ = relative Viskosität, bestimmt in m-Kresol (1 %ige Lösung/25°C)

Tabelle 2

Eigenschaften der Mischungen

| Beispiel | | | 1 (erfindungs-gemäß) | 2 | 3 | 4 | 5 |
|---|---|---|---|---|---|---|---|
| Eigenschaft | Maß-einheit | Prüfvor-schrift (DIN) | | – | (Vergleichsversuche) | | – |
| Reißfestigkeit | MPa | 53 455 | 52 | 44 | 56 | 55 | 70 |
| Reißdehnung | % | 53 455 | 220 | 140 | 200 | 180 | 15 |
| Zug-E-Modul | MPa | 53 457 | 3000 | 2900 | 2900 | 3100 | 2650 |
| Vicat-Erweichungs-temperatur VST/B | °C | 53 460 | 81 | 76 | 85 | 89 | 167 |
| Fließlänge | cm | | 50 | 55 | 40 | 35 | 60 |

In den folgenden Beispielen wird die Abhängigkeit der Eigenschaften vom Mischungsverhältnis Polyamid-66/Poly(hexamethylenisophthalamid) gezeigt.

4

## Tabelle 3

Zusammensetzung der Mischungen (Gew.-%)

| Beispiel | 6 | 7 | 8 | 9 | 10 | 11 | 12 | 13 |
|---|---|---|---|---|---|---|---|---|
| | - | | erfindungsgemäß | | | - | (Vergleiche) | |
| Polyamid | | | | | | | | |
| A | 40 | 50 | 60 | 70 | 80 | 90 | 100 | 0 |
| B | 60 | 50 | 40 | 30 | 20 | 10 | 0 | 100 |

Bestimmung der Fließlänge von Polyamidmischungen (s. Tabelle 4)

Zur Bestimmung der Fließfähigkeit der Polyamidmischungen spritzt man eine Spirale auf einer handelsüblichen Spritzgießmaschine (Arburg). Der Querschnitt des die Spirale bildenden Stranges beträgt 8 mm in der Breite und 2 mm in der Höhe. Die Meßtemperatur der Polyamide ist 280° C, die Werkzeugtemperatur 50° C. Der Spritzdruck beträgt 1100 kp. Sobald eine gleichbleibende Fließlänge erreicht ist, wird die Länge von 5 Spiralen gemessen. Die angegebenen Werte sind Mittelwerte dieser Messungen.

Die Angaben beziehen sich auf die Beispiele 1-5.

Die Messung der Fließlänge in den Beispielen 7, 12 und 13 erfolgte an einer Spirale mit halbrundem Querschnitt.

Breite: 3,5 mm, Höhe 2,5 mm.

Massetemperatur 280° C, Werkzeugtemperatur 55° C.

Spritzdruck 1150 kp.

Fließlänge Beispiel 7: 36-40 cm, Vergleich 12: 26-27 cm Vergleich 13: 72-75 cm.

Tabelle 4   Eigenschaften

| Beispiel | | | erfindungsgemäß | | | | | | (Vergleiche) | |
|---|---|---|---|---|---|---|---|---|---|---|
| Eigenschaft | Maß-einheit | Prüfvorschrift (DIN) | 6 | 7 | 8 | 9 | 10 | 11 | 12 | 13 |
| Reißfestigkeit | MPa | 53 455 | 65 | 52 | 55 | 60 | 58 | 63 | 61 | 90 |
| Reißdehnung | % | 53 455 | 250 | 220 | 220 | 200 | 165 | 160 | 60 | 40 |
| Zug-E-Modul | MPa | 53 457 | 3000 | 3000 | 3100 | 3100 | 3300 | 3300 | 3350 | - |
| Fließlänge | cm | | 36-40 | | | | | | 26-27 | 72-75 |

## Patentansprüche

1. Mischungen von 30 bis 95 Gew.-% Poly-(hexamethylenisophthalamid) und 5 bis 70 Gew.-% Poly-(hexamethylenadipamid), welche gegebenenfalls übliche Zuschlagstoffe und Hilfsmittel, gegebenenfalls Glasfasern in Mengen von höchstens 10 Gew.-% enthalten.

2. Mischungen von 50-90 Gew.-% Poly-(hexamethylenisophthalamid) und 10 bis 50 Gew.-% Poly-(hexamethylenadipamid) nach Anspruch 1.

3. Mischungen nach Anspruch 1, dadurch gekennzeichnet, daß das für die Mischung verwendete Poly-(hexamethylenisophthalamid) relative Viskositäten $\eta_{rel}$ von 1,8 bis 3,5 und das Poly-(hexamethylenadipamid) $\eta_{rel}$ von 2,3 bis 4,0 (gemessen in 1%iger m-Kresollösung bei 25° C) aufweist.

4. Mischungen nach Anspruch 1-3, dadurch gekennzeichnet, daß das für die Mischung verwendete Poly-(hexamethylenisophthalamid) relative Viskositäten $\eta_{rel}$ von 2,2-2,9 und das Poly-(hexamethylenadipamid) $\eta_{rel}$ von 2,8 bis 3,5 (gemessen in 1 %iger m-Kresollösung bei 25° C) aufweist.

5. Mischungen nach Ansprüchen 1-4, dadurch gekennzeichnet, daß sie übliche Zuschlagstoffe und Hilfsmittel und Glasfasern in Mengen von ≦ 5 Gew.-% enthalten.

6. Verwendung der Mischungen nach Ansprüchen 1 bis 5 zur Herstellung von Formkörpern über Schmelzverarbeitung.

## Claims

1. Mixtures of 30 to 95% by weight of poly-(hexamethyleneisophthalamide) and 5 to 70% by weight of poly-(hexamethyleneadipamide), which contain, if appropriate, customary additives and auxiliaries, and if appropriate glass fibres in amounts of not more than 10% by weight.

2. Mixtures of 50-90% by weight of poly-(hexamethyleneisophthalamide) and 10 to 50% by weight of poly-(hexamethyleneadipamide) according to Claim 1.

3. Mixtures according to Claim 1, characterised in that the poly(hexamethyleneisophthalamide) used for the mixture has relative viscosities $\eta_{rel}$ of 1.8 to 3.5 and the poly-(hexamethyleneadipamide) has $\eta_{rel}$ of 2.3 to 4.0 (measured in 1% strength m-cresol solution at 25° C).

4. Mixtures according to Claim 1-3, characterised in that the poly-(hexamethyleneisophthalamide) used for the mixture has relative viscosities $\eta_{rel}$ of 2.2-2.9 and the poly-(hexamethyleneadipamide) has $\eta_{rel}$ of 2.8 to 3.5 (measured in 1% strength m-cresol solution at 25° C).

5. Mixtures according to Claims 1-4, characterised in that they contain customary additives and auxiliaries and glass fibres in amounts of ≦ 5% by weight.

6. Use of the mixtures according to Claims 1 to 5 for the production of mouldings by melt processing.

## Revendications

1. Mélanges de 30 à 95 % en poids de poly(hexaméthylène-isophtalamide) et de 5 à 70 % en poids de poly-(hexaméthylène-adipamide), qui contiennent éventuellement des additifs et des adjuvants classiques, le cas échéant des fibres de verre, en quantités atteignant au maximum 10 % en poids.

2. Mélanges de 50 à 90 % en poids de poly(hexaméthylène-isophtalamide) et de 10 à 50 % en poids de poly-(hexaméthylène-adipamide) suivant la revendication 1.

3. Mélanges suivant la revendication 1, caractérisés en ce que le poly-(hexaméthylène-isophtalamide) utilisé pour le mélange présente des viscosités relatives $\eta_{rel}$ de 1,8 à 3,5 et le poly-(hexaméthylène-adipamide) présente des viscosités relatives $\eta_{rel}$ de 2,3 à 4,0 (mesurées sur une solution à 1 % dans le m-crésol à 25° C).

4. Mélanges suivant les revendications 1 à 3, caractérisés en ce que le poly-(hexaméthylène-isophtalamide) utilisé pour le mélange présente des viscosités relatives $\eta_{rel}$ de 2,2 à 2,9 et le poly-(hexaméthylène-adipamide) présente des viscosités relatives $\eta_{rel}$ de 2,8 à 3,5 (mesurées sur une solution à 1 % dans le m-crésol à 25° C).

5. Mélanges suivant les revendications 1 à 4, caractérisés en ce qu'ils contiennent des additifs et des adjuvants classiques et des fibres de verre en quantités inférieures ou égales à 5 % en poids.

6. Utilisation des mélanges suivant les revendications 1 à 5 pour la production de pièces moulées par mise en oeuvre à l'état fondu.